# EUROPÄISCHE PATENTSCHRIFT

(11) **EP 2 643 417 B1**
(45) Veröffentlichungstag und Bekanntmachung des Hinweises auf die Patenterteilung: **25.02.2015**
(21) Anmeldenummer: 11791245.1
(22) Anmeldetag: 22.11.2011
(51) Int. Cl.: B60R 13/08, G10K 11/16

(54) **VERFAHREN UND DÄMPFUNGSELEMENT ZUR REDUZIERUNG DER EIGENSCHWINGUNGEN EINES BAUTEILS**
METHOD AND DAMPING ELEMENT FOR REDUCING THE NATURAL VIBRATION OF A COMPONENT
PROCÉDÉ ET ÉLÉMENT D'AMORTISSEMENT DESTINÉS À RÉDUIRE LES VIBRATIONS PROPRES D'UN ÉLÉMENT

(30) Priorität: 24.11.2010 DE 102010052417
(43) Veröffentlichungstag der Anmeldung: 02.10.2013
(73) Patentinhaber: Faist ChemTech GmbH, 67547 Worms (DE)
(72) Erfinder: FUHRMANN, Bernd, 86381 Krumbach (DE); GREVENER, Christoph, 75391 Gechingen (DE); HARDT, Christian, 65451 Kelsterbach (DE); KORNACKI, Zdislaw, 61130 Niederau-Heldenbergen (DE); LAWRENCE, Petra, 71134 Aidlingen (DE); OBST, Heike Ursula, 67551 Worms (DE); PATSOURAS, Dimitrios, 65929 Frankfurt-Höchst (DE)
(74) Vertreter: Müller Schupfner & Partner Patent- und Rechtsanwaltspartnerschaft mbB
(86) Internationale Anmeldenummer: PCT/EP2011/070626
(87) Internationale Veröffentlichungsnummer: WO 2012/069445

(56) Entgegenhaltungen:
- EP-A1- 0 542 201
- DE-A1- 10 336 842
- DE-A1-102008 050 772
- DE-A1-102010 049 107

## Beschreibung

Die Erfindung betrifft ein Verfahren zur Reduzierung der Eigenschwingungen eines Bauteils und die Verwendung eines Dämm- bzw. Dämpfungselements zur Reduzierung der Eigenschwingungen eines Bauteils.

Aus dem Stand der Technik ist es allgemein bekannt, dass Fahrgeräusche im Innenraum eines Fahrzeugs durch Aufbringen verschiedener Akustikmaterialien, wie Dämm- bzw. Dämpfungsmatten und spritzbarer Akustikmassen, auf Fahrzeugbauteile vermindert werden. Zur Erzeugung der Dämmung mittels Dämm- bzw. Dämpfungsmatten werden großflächige Matten an einer vorgesehenen Position auf das Fahrzeugbauteil aufgelegt und schmelzen bei nachfolgenden Prozesstemperaturen auf den Untergrund auf. Hierdurch wird das Fahrzeugbauteil lokal versteift.

Aus der DE 103 36 842 A1 sind selbsthaftende, vibrationsdämpfende Streifen zum Anhaften auf einem Substrat, wie einem Kraftfahrzeug- oder Zubehörteil, zur Schall- und Vibrationsdämpfung bekannt. Auch der in der EP 0 542 201 A1 beschriebene Haftklebeartikel in Form eines Bandes oder einer Folie umfassend eine hitzebeständige, vibrationsdämpfende Haftklebstoffzusammensetzung wird zur Vibrations- und Geräuschdämmung auf Kraftfahrzeugteile aufgebracht.

Weiterhin ist es aus dem Stand der Technik allgemein bekannt, dass bei der Herstellung einer Fahrzeugkarosserie Öffnungen in Karosseriebauteilen zur Durchführung verschiedener Arbeitsschritte, wie einer Fixierung der Karosseriebauteile und einer Durchführung von Korrosionsschutzmaßnahmen, verwendet werden. Bei der Durchführung von Korrosionsschutzarbeiten sind die Öffnungen für eine Zuführung von Lack wahrend einer Tauchlackierung und/oder als Ablauflöcher von überschüssigem Lack vorgesehen. Alternativ oder zusätzlich wird eine Zuführung von Wachs zu einer Hohlraumkonservierung und eine Abführung von überschüssigem Wachs mittels der Öffnungen realisiert. Zur Erzielung eines geringen Geräuschniveaus und einer Dichtheit des Fahrzeugs werden die Öffnungen im weiteren Produktionsprozess wieder verschlossen. Die Öffnungen werden beispielsweise manuell mittels Stopfen oder Klebeelementen, auch Klebepads genannt, verschlossen und abgedichtet.

Ein derartiges Klebeelement ist aus der DE 10 2008 050 772 A1 bekannt. Das Klebeelement ist mehrschichtig aus einer Trägerfolie und einer selbstklebenden Dämpfungsmasse gebildet, wobei die Dämpfungsmasse Butylkautschuk ist. Auf zumindest einer von der Dämpfungsmasse abgewandten Seite der Trägerfolie ist eine überlackierbare Korrosionsschutzschicht aufgebracht. Das Klebeelement ist aus Aluminium, einer Aluminiumlegierung, aus Edelstahl oder aus Polyethylenterephthalat gebildet.

Der Erfindung liegt die Aufgabe zugrunde, ein Verfahren zur Reduzierung der Eigenschwingungen eines Bauteils und ein Dämm- bzw. Dämpfungselement zur Reduzierung der Eigenschwingungen eines Bauteils anzugeben.

Hinsichtlich des Verfahrens wird die Aufgabe erfindungsgemäß durch die im Anspruch 1 angegebenen Merkmale und hinsichtlich der Verwendung des Dämm- bzw. Dämpfungselements durch die im Anspruch 6 angegebenen Merkmale gelöst. Vorteilhafte Ausgestaltungen der Erfindung sind Gegenstand der Unteransprüche. In dem Verfahren zur Reduzierung der Eigenschwingungen eines Bauteils wird erfindungsgemäß ein Schwingungsverhalten des Bauteils ermittelt. An den dabei ermittelten Positionen, an welchen Schwingungsamplituden auftreten, welche einen vorgegebenen Grenzwert überschreiten, wird lokal jeweils ein Dämm- bzw. Dämpfungselement befestigt, welches als mehrschichtiges Klebeelement mit einer Trägerschicht und einer selbstklebenden Dämpfungsmasse ausgebildet ist.

Aufgrund der lokalen Verwendung der als mehrschichtige, steife Klebeelemente, als sogenannte Klebepads, ausgebildeten Dämm- bzw. Dämpfungselemente und deren positionsgenauer Anordnung wird gegenüber großen, schweren und flächendeckenden Dämm- oder Dämpfungsmatten eine Gewichtsreduzierung bei gleichzeitiger Verbesserung der akustischen Wirksamkeit erzielt. Die daraus resultierende Reduzierung der Eigenschwingungen und Erhöhung der Körperschalldämmung folgt aus der Verklebung des mehrschichtigen Klebeelements mit dem Bauteil, wodurch eine besonders steife Verbindung mit hoher akustischer Wirksamkeit erreicht wird. Daraus resultiert bei einer Verwendung des Verfahrens zur Reduzierung der Eigenschwingungen eines Fahrzeugbauteils neben einer Komforterhöhung für Insassen des Fahrzeugs eine Reduzierung eines Kraftstoffverbrauchs durch die geringere Gewichtseinbringung und somit eine Verminderung des Schadstoff- sowie Kohlenstoffdioxidausstoßes.

Gegenüber bekannten großflächigen Serienentdröhnfolien aus Bitumen kann die Körperschalldämmung bei gleichzeitiger Gewichtsreduzierung von 40 % - 60 % reduziert werden. Im Vergleich zur Verwendung von Magnetfolien zur Körperschalldämmung ist die Gewichtseinsparung weiter verbessert. Die Wirkung der Körperschalldämmung ist in Kurvenverlaufen von Übertragungsfunktionen in Abhängigkeit von einer Terzmittenfrequenz ersichtlich, welche beispielsweise durch die Laser-Scanning-Vibrometrie ermittelt werden.

Weiterhin ist ein Materialeinsatz aufgrund der kleineren Größe der Klebepads gegenüber den großflächigen Dämm- bzw. Dämpfungsmatten und aufgrund der lokalen oder spotartigen Anordnung gegenüber der flächigen Anordnung verringert. Daraus resultieren insbesondere Kosteneinsparungen.
Weiterhin zeichnen sich die Klebepads durch eine sehr einfache Verarbeitung und Befestigung, insbesondere an Bauteilen mit komplizierten Geometrien, aus. Auch ist eine automatisierte Verarbeitung der Klebepads rnöglich, woraus eine Verringerung der Herstellungszeit und des Personaleinsatzes und daraus folgend weitere Kosteneinsparungen resultieren.

Ausführungsbeispiele der Erfindung werden im Folgenden anhand von Zeichnungen näher erläutert.

Dabei zeigen:
- Fig. 1: schematisch ein Dämm- bzw. Dämpfungselement für das Verfahren und die Verwendung im Sinne der vorliegenden Erfindung,
- Fig. 2A: schematisch ein Bauteil mit einem Dämm- bzw. Dämpfungselement nach dem Stand der Technik,
- Fig. 2B: schematisch eine Schnittansicht eines Bauteils mit einem Dämm- bzw. Dämpfungselement nach dem Stand der Technik,
- Fig. 3: schematisch ein Bauteil mit mehreren aufgebrachten Dämm- bzw. Dämpfungselementen gemäß Figur 1, und
- Fig. 4: schematisch mehrere auf ein Trägerelement aufgebrachte Dämm- bzw. Dämpfungselemente.

Einander entsprechende Teile sind in allen Figuren mit den gleichen Bezugszeichen versehen.

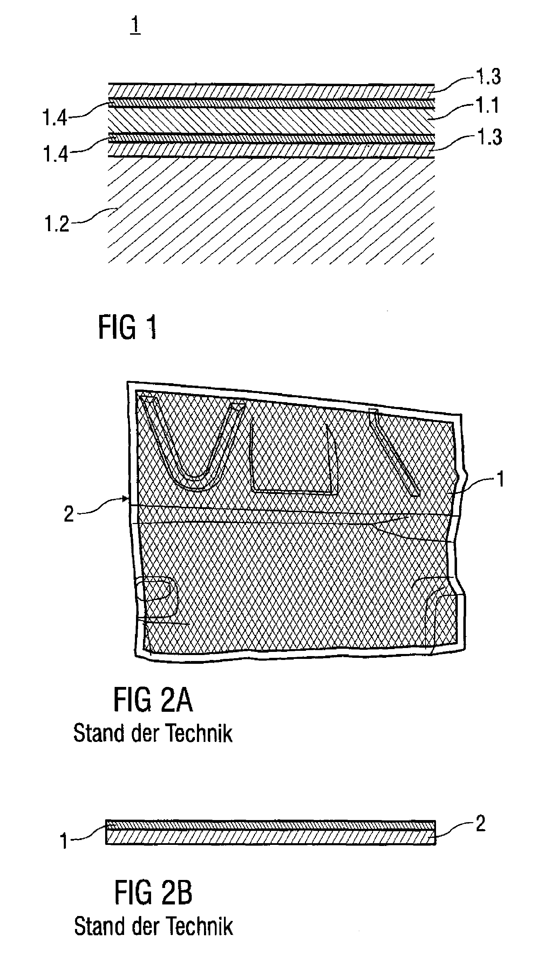

In Figur 1 ist ein erfindungsgemäßes Dämm- bzw. Dämpfungselement (i.f. Dämpfungselement, da das Element im Wesentlichen dämpfende und nur zum Teil dämmende Eigenschaften aufweist) 1 dargestellt. Das Dämpfungselement 1 ist als Klebeelement ausgebildet, welches mehrschichtig aus einer Trägerschicht 1.1 und einer selbstklebenden Dämpfungsmasse 1.2 gebildet ist.

Ein solches Dämpfungselement ist aus der DE 10 2008 050 772 A1 prinzipiell bekannt. Dort wird es jedoch primar zu einem anderen Zweck, zum Verschluss von Öffnungen in einer Kraftfahrzeugkarosserie, verwendet.

In einer besonders bevorzugten Ausgestaltung ist die Trägerschicht 1.1 aus einer so genannten 5xxx-Aluminiumlegierung gebildet, welche einen Anteil von 0,2 % bis 6,2 °/0 Magnesium aufweist. Die 5xxx-Aluminiumlegierung zeichnet sich durch eine hohe Festigkeit aus, welche im Bereich von 100 N/mm² bis 450 N/mm² liegt.

Alternativ zur Verwendung der 5xxx-Aluminiumlegierung ist die Trägerschicht 1.1 aus Edelstahl, Stahl oder einem anderen biegesteifen Metall gebildet, welches ebenfalls eine hohe Festigkeit aufweist, Die Trägerschicht kann beispielsweise auch als 4xxx-, 5xxxoder 7xxx-Aluminiumlegierung ausgebildet sein.

Aufgrund dieser hohen Festigkeit eignet sich das Dämpfungselement 1 besonders zur Körperschalldämpfung bzw. -dämmung von Bauteilen 2, Ein derartiges Bauteil ist in Figur 2 näher dargestellt. Gleichzeitig eignet sich das Dämpfungselement 1 zum Verschluss von Öffnungen in Bauteilen 2, insbesondere in Karosseriebauteilen, und ist besonders einfach auf die Bauteile 2 applizierbar.

Das Material, aus welchem die Trägerschicht 1.1 gebildet ist, zeichnet sich weiterhin durch eine hohe Korrosionsbeständigkeit aus, so dass eine Korrosion des Dämpfungselements 1 vermieden wird.

Um die Korrosionsbeständigkeit weiter zu verbessern, ist auf der Trägerschicht 1.1 beidseitig eine Korrosionsschutzschicht 1.3 aufgebracht. Die Korrosionsschutzschicht 1.3 ist insbesondere aus einem Lack oder einer Folie gebildet, wobei vorzugsweise der Lack als so genannte KTL-Ersatzbeschichtung (KTL = Kathodische Tauchlackierung) auf die Trägerschicht 1.1 aufgebracht ist. Derartige KTL-Ersatzbeschichtungen bzw. KTL-Lacksysteme sind spezielle Lacke, welche für ihre spätere Anwendung optimiert sind. Sie basieren auf Polyurethan, Epoxid, Melamin, Polyester und/oder einer Mischung dieser. Ebenfalls sind einer Decklackschicht des Lackes vorzugsweise Gleithilfsmittel beigemischt, um eine spätere Elastizität bzw. Flexibilität des Dämpfungselementes 1 sicherzustellen. Somit ist dieses in bevorzugter Weise an das jeweilige Bauteil anpassbar.

Die aus dem Lack oder der Folie gebildete Korrosionsschutzschicht 1.3 ist dabei vorzugsweise in einem Coil Coating Verfahren, welches auch als Bandbeschichtung oder kontinuierliche Metallbandbeschichtung bekannt ist, auf die Trägerschicht 1.1 applizierbar.

Insbesondere ist die Korrosionsschutzschicht 1.3 aus Polyethylen gebildet. Aufgrund der Korrosionsschutzschicht 1.3 ist weiterhin eine Haftung der Dämpfungsmasse 1.2, welche aus Butylkautschuk gebildet ist, auf der Trägerschicht 1.1 verbessert. Zusätzlich ist die Korrosionsschutzschicht 1.3 überlackierbar, so dass das Dämpfungselement 1 in einfacher Weise mit der Farbe des Fahrzeugs lackierbar ist.

Um weiterhin eine Haftung der Korrosionsschutzschicht 1.3 auf der Trägerschicht 1.1 sicherzustellen, ist auf die Trägerschicht 1.1 beidseitig eine Haftvermittlerschicht 1.4 aufgebracht. Die Haftvermittlerschicht 1.4 ist vorzugsweise chromfrei und wird als dünner Flüssigfilm beidseitig auf die Trägerschicht 1.1 aufgebracht. Die Haftvermittlerschicht 1.4 ist vorzugsweise aus Alodine® NR 1453 der Firma Henkel gebildet. Diese Haftvermittlerschicht 1.4 zeichnet sich gleichzeitig dadurch aus, dass sie ebenfalls einen Korrosionsschutz für die Trägerschicht 1.1 bewirkt.

Auch ist es in einer weiteren Ausgestaltung des Dämpfungselements 1 möglich, dass die Trägerschicht 1.1 aus einem Kunststoff mit einer ähnlich hohen Festigkeit gebildet ist. Hierbei ist eine Korrosion der Trägerschicht 1.1 nicht möglich, so dass zumindest die Korrosionsschutzschicht 1.3 entfallen kann. In vorteilhafter Weise ist auf den Kunststoff zumindest einseitig eine Haftvermittlerschicht 1.4 aufgebracht, so dass eine verbesserte Haftung von auf die Trägerschicht 1.1 aufgebrachtem Lack erhöht ist. Somit ist das Dämpfungselements 1 in einfacher Weise überlackierbar und einfach optisch an die Farbe des Bauteils anpassbar.

Der dargestellte mehrschichtige Aufbau des Dämpfungselements 1 mit der aus dem biegesteifen Material gebildeten Trägerschicht 1.1 und der aus Butylkautschuk gebildeten Dämpfungsmasse 1.2 zeichnet sich durch besonders gute akustische Eigenschaften, so genannte Entdröhnungseigenschaften, und eine einfache und flexible Verarbeitung aus.

Die aus Butylkautschuk gebildete Dämpfungsmasse 1.2 zeichnet sich dadurch aus, dass diese auf mit Korrosionsschutzöl geölten Blechen dauerhaft applizierbar ist. Auch zeichnet sich das Dämpfungselements 1 durch eine chemische Beständigkeit gegen Wasser, Alkohole, verdünnte Säuren und Laugen aus. Der Butylkautschuk ist insbesondere auf Basis thermoplastischer Elastomere, Polymere, Klebeharzen, Füllstoffen, Thixotrophierhilfsmittel sowie anderen Modifikatoren hergestellt.

Um eine elektrische Leitung zwischen der Trägerschicht 1.1 und dem Karosseriebauteil über die Dämpfungsmasse 1.2 und somit die Korrosion der Trägerschicht 1.1 und/oder des Karosserieelements zu vermeiden, ist die zwischen der Trägerschicht 1.1 und der Dämpfungsmasse 1.2 eingebrachte Korrosionsschutzschicht 1.3 elektrisch isolierend ausgebildet.

Alternativ oder zusätzlich zu der Einbringung der elektrisch isolierenden Korrosionsschutzschicht 1.3 ist zur Verringerung der elektrischen Leitfähigkeit der Dämpfungsmasse 3 ein Butylkautschuk einsetzbar, welchem bestimmte Füllstoffe, wie beispielsweise Ruß, entzogen sind.

Figur 2A zeigt in einer Draufsicht ein Bauteil 2, welches nach dem Stand der Technik mit einem Dämpfungselement 1 in Form einer großflächigen Dämm- bzw. Dämpfungsmatte (hier hat die Matte sowohl dämmende als auch dämpfende Eigenschaften) versehen ist, welche für die gewünschte Körperschalldämmung bzw. -dämpfung sorgt. Figur 2B zeigt Bauteil und Dämmmatte 1 in einer Schnittdarstellung. Auf den Figuren ist gut erkennbar, dass für diese aus dem Stand der Technik bekannte Dämmmatte sehr viel Material aufgewendet werden muss, was zusätzlich noch das Bauteilgewicht erhöht.

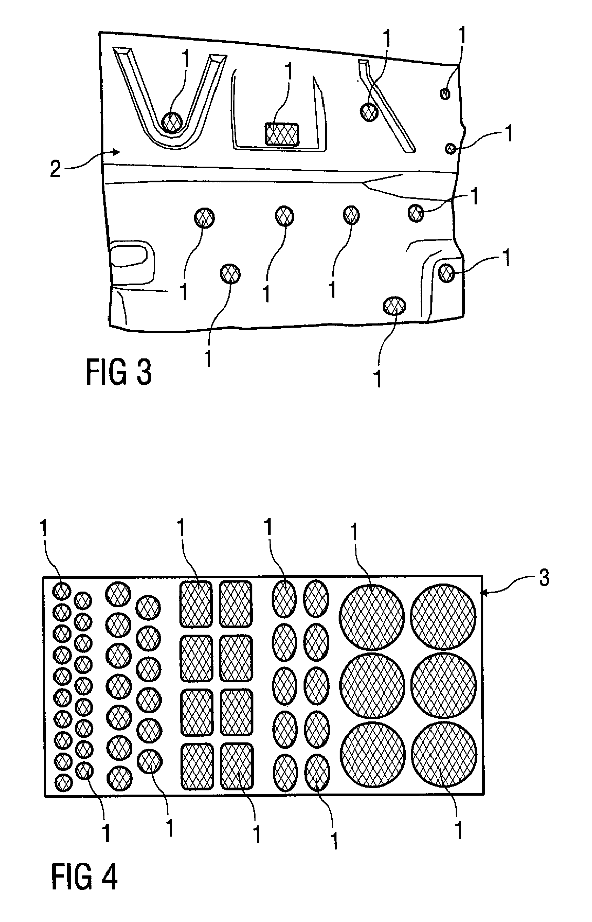

Im Unterschied dazu zeigt Figur 3 die erfindungsgemäße Lösung in Form eines Bauteils 2 mit mehreren aufgebrachten Dämpfungselementen 2. Bei dem Bauteil 2 handelt es sich im dargestellten Ausführungsbeispiel um ein aus Blech gebildetes Karosseriebauteil eines Fahrzeugs. In alternativen Ausgestaltungen ist das Bauteil ein Bauteil aus anderen Bereichen, beispielsweise aus der Bauindustrie, dem Schiffbau, dem Flugzeugbau oder dem Hausgerätebau. Auch kann das Bauteil 2 aus Stahlblech, Aluminiumblech, KTL oder lackbeschichteten Teilen sowie Kunststoffteilen gebildet sein.

Im Betrieb des Bauteils 2 können Schwingungen und Schall auftreten. Beim dargestellten Ausführungsbeispiel des Bauteils 2 als Karosseriebauteil des Fahrzeugs werden die Schwingungen und der Schall durch den Betrieb des Fahrzeugs am Bauteil 2 erzeugt. Um die auftretenden Schwingungen und den Schall zu minimieren, wird ein Körperschall des Bauteils 2 durch lokales, das heißt spotartiges, Aufbringen mehrerer Dämpfungselemente 1 auf das Bauteil 2 gedämpft und gedämmt.

Hierzu wird ein Schwingungsverhalten des Bauteils 2 in einer Simulation ermittelt. In einer besonders bevorzugten Ausgestaltung werden mittels Laser-Scanning-Vibrometrie Körperschalluntersuchungen an dem Bauteil 2 oder an Zusammenschlüssen mehrerer Bauteile 2, wie Fahrzeugkarosserien, durchgeführt.

Hierzu wird das Bauteil 2 in nicht naher dargestellter Weise an einer oberen Kante fest eingespannt und mit einem elektrodynamischen Schwingerreger, auch Shaker genannt, angeregt. Ein Frequenzspektrum der Anregung umfasst dabei eine Bandbreite von üblicherweise 40 Hertz bis 1000 Hertz.

Die erzeugten Schwingungen des Bauteils 2 werden beispielsweise mit einem ebenfalls nicht dargestellten so genannten Laser-Scanning-Vibrometer erfasst. Hierzu wird auf dem Bauteil 2 ein Messraster mit einer Vielzahl von Scanpunkten festgelegt. Das Bauteil 2 wird zunächst leer, das heißt ohne aufgebrachte Dämpfungselemente 1 oder andere Dämm- bzw. Dämpfungsmittel, mit den Schwingungen angeregt, wobei die Verteilung der Schwingungen über das Bauteil 2 mittels des Laser-Scanning-Vibrometers bei verschiedenen Frequenzen gemessen wird. Dabei wird für jede Frequenz eine so genannte Colourmap erzeugt, in welcher verschiedene Schwingungsamplituden verschiedenfarbig dargestellt sind.

Aus den jeweiligen Farben im Colourmap werden die Schwingungsamplituden abgelesen. Bereiche des Bauteils 2 mit hohen Schwingungsamplituden heben sich farblich von den übrigen Bereichen ab.

An diesen Positionen, an welchen die Schwingungsamplituden einen vorgegebenen Grenzwert überschreiten, wird zur lokalen Versteifung des Bauteils 2 jeweils ein Dämpfungselements 1 befestigt.

Das Dämpfungselements 1 wird mit der Dämpfungsmasse 1.2 auf das Bauteil 2 aufgeklebt und somit befestigt. Das Dämpfungselements 1 kann dabei an Positionen des Bauteils 2 angeordnet werden, welche aus Vollmaterial bestehen oder an welchen sich Öffnungen im Bauteil 2 befinden. Hierbei wird das Dämpfungselements 1 gleichzeitig zum Verschließen von Öffnungen am Bauteil 2 verwendet.

Eine Wirksamkeit der an dem Bauteil 2 angeordneten Dämpfungselemente 1 wird in einer Weiterbildung mittels einer erneuten Durchführung der Messung anhand beispielsweise der Laser-Scanning-Vibrometrie und Auswertung der erzeugten Colourmaps überprüft. Die Wirksamkeit der Dämpfungselemente 1 wird in Abhängigkeit der Ergebnisse gegebenenfalls durch Korrekturen optimiert. Die Korrekturen erfolgen insbesondere durch die Anordnung von Dämpfungselementen 1 einer anderen Größe, einer Lagekorrektur der aufgebrachten Dämpfungselemente 1 und/oder durch die Anordnung zusätzlicher Dämpfungselemente 1.

Die akustische Wirkung des Dämpfungselements 1 wird durch mehrere Parameter eingestellt: Sie wird zum einen durch die Elastizität (das E-Modul), die Dicke, die Dichte und das Flächengewicht der Dämpfungsmasse 1.2 sowie zum anderen durch die Dicke, das Flächengewicht und die Steifigkeit der Trägerschicht 1.1 festgelegt.

Zur Erzielung einer besonders guten Körperschalldämmung bzw. -dämpfung weist die Trägerschicht 1.1 vorzugsweise eine Dicke von 0,1 mm bis 0,4 mm auf.

Aus dem sandwichartigen Aufbau der Dämpfungselemente 1 in Verbindung mit der Verklebung des Dämpfungselements 1 mit dem Bauteil 2 wird lokal ein hohes Flächenträgheitsmoment erreicht. Als Folge ergeben sich eine sehr große Versteifung des Bauteils 2 und dadurch eine verbesserte Körperschalldämmung und Entdröhnung. Die Entdröhnwirkung ist umso größer, je steifer das verwendete Material der Trägerschicht 1.1 ist.

Insbesondere Dämpfungselemente 1, deren Trägerschicht 1.1 aus Aluminium und deren Dämpfungsschicht 1.2 aus Butylkautschuk gebildet ist, zeigen eine sehr gute Entdröhnwirkung. Das heißt, Oberflächenschwingungen des Bauteils 2 werden signifikant gedämpft, so dass der Körperschall gemindert und die Abstrahlung von Luftschall verhindert wird. Es können aber auch andere Materialien für die Dämpfungsschicht 1.2 wie beispielsweise Bitumen verwendet werden. Die Steifigkeit der Dämpfungsschicht 1.2 ist mit Vorteil geringer als die Steifigkeit der Trägerschicht 1.1.

Damit trotz der hohen Steifigkeit des Dämpfungselements 1 eine optimierte Befestigung des Dämpfungselements 1 an Konturen des Bauteils 2 erfolgen kann, werden die Dämpfungselemente 1 in verschiedenen Größen und Formen hergestellt, so dass ein Bereich des Bauteils 2 mit hoher Schwingungsamplitude mit einem passgenauen Dämpfungselement 1 oder mehreren Dämpfungselementen 1 versteifbar ist.

Das Aufbringen der Dämpfungselemente 1 auf das Bauteil 1 erfolgt manuell, indem an der beispielsweise durch die Laser-Scanning-Vibrometrie erfassten Position mit hoher Schwingungsamplitude ein oder mehrere Dämpfungselemente 1 angeordnet werden. Diese Position kann aber auch durch andere Methoden bestimmt werden.

Aus der Verwendung der aus dem biegesteifen Material gebildeten Trägerschicht 1.1 resultiert in besonders vorteilhafter Weise, dass die Dämpfungselemente 1 alternativ oder zusätzlich automatisiert auf das Bauteil 2 aufbringbar sind.

Dabei sind, wie in Figur 4 dargestellt, das Dämpfungselement 1 beispielsweise mittels eines Roboters automatisiert von einem Trägerelement 3 getrennt und anschließend automatisiert an dem Bauteil 2 befestigt. Das Aufbringen der Dämpfungselemente 1 kann dabei sowohl zur Körperschalldämmung bzw.-dämpfung des Bauteils 2 als auch zum dichten Verschließen von Öffnungen im Bauteil 2 erfolgen. Ein derartiges Trägerelement 3 mit mehreren auf diesem angeordneten Dämpfungselementen 1 ist in Figur 4 dargestellt.

Das Trägerelement 3, der so genannte Liner, ist als vorkonfektionierter flacher Bogen ausgebildet, auf welchem mehrere Dämpfungselemente 1 aufgebracht sind. Dabei ist das Trägerelement 3 aus Papier, Polyethylen oder Polyethylenterephthalat-Folie gebildet.

In einer besonderen Ausgestaltung sind alle für eine spezifische Anwendung, beispielsweise ein Fahrzeug, erforderlichen Varianten von Dämpfungselementen 1 als ein Satz auf einem Bogen oder auf mehreren Bögen angeordnet. Die Ausbildung des Trägerelements 3 als flacher Bogen ermöglicht eine Beherrschung der Variantenvielfalt der Dämpfungselemente 1 bei einer spezifischen Anwendung bei minimierten Materialverschnitt und Platzverbrauch. Gegenüber einer Verwendung von auf Rollen aufgebrachten Dämpfungselementen 1 besteht weiterhin der Vorteil, dass ein unkontrolliertes Lösen der Dämpfungselemente 1 von dem Trägerelement vermieden wird. Auch ist herstellungsbedingter Materialausschuss nur bei Bogenware aussortierbar. Bei Rollen- oder Endlosmaterial kann es dagegen zu Störungen in einer Applikations-Anlage zum automatischen Aufbringen der Dämpfungselemente 1 kommen.

## Patentansprüche

1. Verfahren zur Reduzierung der Eigenschwingungen eines Bauteils (2),
**dadurch gekennzeichnet,**
**dass** ein Schwingungsverhalten des Bauteils (2) ermittelt wird und dass an dabei ermittelten Positionen, an welchen Schwingungsamplituden auftreten, welche einen vorgegebenen Grenzwert überschreiten, spatartig jeweils ein Dämpfungselement (1) positionsgenau befestigt wird, welches als mehrschichtiges Klebeelement mit einer Trägerschicht (1.1) und einer selbstklebenden Dampfungsmasse (1.2) ausgebildet ist.

2. Verfahren nach Anspruch 1,
**dadurch gekennzeichnet,**
**dass** das Schwingungsverhalten in einer Simulation ermittelt wird.

3. Verfahren nach Anspruch 1 oder 2,
**dadurch gekennzeichnet,**
**dass** das Schwingungsverhalten mittels Laser-Scanning-Vibrometrie ermittelt wird.

4. Verfahren nach einem der vorhergehenden Ansprüche,
**dadurch gekennzeichnet,**
**dass** das Dämpfungselement (1) manuell und/oder automatisiert an dem Bauteil (2) befestigt wird.

5. Verfahren nach einem der vorhergehenden Ansprüche,
**dadurch gekennzeichnet,**
**dass** das Dämpfungselement (1) automatisiert von einem Trägerelement (3) getrennt und an dem Bauteil (2) befestigt wird.

6. Verwendung eines Dämpfungselements (1) zur Reduzierung der Eigenschwingungen eines Bauteils (2) bei einem Verfahren nach einem der vorhergehenden Ansprüche.

7. Verwendung nach Anspruch 6,
**dadurch gekennzeichnet,**
**dass** das Dämpfungselement (1) als mehrschichtiges Klebeelement aus einer Trägerschicht (1.1) und einer selbstklebenden Dämpfungsmasse (1.2) gebildet ist, wobei die Trägerschicht (1.1) aus einem biegesteifen Material und die Dämpfungsmasse (1.2) aus einem Material gebildet ist, das eine geringere Steifigkeit als die Trägerschicht 1.1 aufweist, wobei das Material der Trägerschicht (1.1) eine naturharte Aluminiumlegierung oder Edelstahl ist.

8. Verwendung nach Anspruch 7,
**dadurch gekennzeichnet,**
**dass** die naturharte Aluminiumlegierung eine 5xxx-Aluminiumlegierung ist.

## Claims

1. A method for reducing the natural vibrations of a component (2),
**characterised in that**
a vibration behavior of the component (2) is determined and an attenuation element (1) which is formed as a multilayered adhesive element having a support layer (1.1) and a self-adhesive damping mass (1.2) is mounted in a spot-like manner with positional accuracy to each of the positions thereby determined where vibration amplitudes exceeding a preset threshold value occur.

2. The method according to claim 1,
**characterised in that**
the vibration behavior is determined in a simulation.

3. The method according to claim 1 or 2,
**characterised in that**
the vibration behavior is determined by way of laser scanning vibrometry.

4. The method according to one of the preceding claims,
**characterised in that**
the attenuation element (1) is mounted to the component (2) manually and/or in an automated manner.

5. The method according to one of the preceding claims,
**characterised in that**
the attenuation element (1) is separated from a support element (3) and mounted to the component (2) in an automated manner.

6. Use of an attenuation element (1) for reducing the natural vibrations of a component (2) in a method according to one of the preceding claims.

7. Use according to claim 6,
**characterised in that**
the attenuation element (1) is formed as a multilayered adhesive element of a support layer (1.1) and a self-adhesive damping mass (1.2), wherein the support layer (1.1) is formed of a bending-resistant material and the damping mass (1.2) is formed of a material, which has a stiffness lower than the support layer (1.1), the material of the support layer (1.1) being an intrinsically hard aluminum alloy or stainless steel.

8. Use according to claim 7,
**characterised in that**,
the intrinsically hard aluminum alloy is a 5xxx aluminum alloy.

## Revendications

1. Procédé pour la réduction des oscillations propres d'un composant (2),
**caractérisé en ce que**
on détermine un comportement d'oscillations du composant (2) et **en ce que**, au niveau de positions ici déterminées auxquelles apparaissent des amplitudes d'oscillations qui dépassent une valeur limite prédéterminée, l'on fixe de façon exacte ponctuellement un élément amortisseur respectif (1) qui est réalisé sous forme d'élément collé en plusieurs couches comprenant une couche porteuse (1.1) et une masse d'amortissement autocollante (1.2).

2. Procédé selon la revendication 1,
**caractérisé en ce que** l'on détermine le comportement d'oscillations dans une simulation.

3. Procédé selon la revendication 1 ou 2,
**caractérisé en ce que** l'on détermine le comportement d'oscillations au moyen d'une technique de vibrométrie par scannage au laser.

4. Procédé selon l'une des revendications précédentes,
**caractérisé en ce que** l'on fixe l'élément amortisseur (1) manuellement et/ou de manière automatisée sur le composant (2).

5. Procédé selon l'une des revendications précédentes,
**caractérisé en ce que** l'on sépare l'élément amortisseur (1) de manière automatisée d'un élément porteur (3) et le fixe sur le composant (2).

6. Utilisation d'un élément amortisseur (1) pour la réduction des oscillations propres d'un composant (2) dans un procédé selon l'une des revendications précédentes.

7. Utilisation selon la revendication 6,
**caractérisée en ce que** l'élément amortisseur (1) est réalisé sous forme d'élément collé en plusieurs couches comprenant une couche porteuse (1.1) et une masse d'amortissement autocollante (1.2), dans laquelle la couche porteuse (1.1) est réalisée en un matériau résistant à la flexion et la masse d'amortissement (1.2) est réalisée en un matériau qui présente une rigidité plus faible que la couche porteuse (1.1), dans laquelle le matériau (1.1) est un alliage d'aluminium naturellement dur ou un acier inoxydable.

8. Utilisation selon la revendication 7,
**caractérisée en ce que** l'alliage d'aluminium naturellement dur est un alliage d'aluminium du type 5xxx.
